# EUROPEAN PATENT SPECIFICATION

(11) **EP 2 724 122 B1**
(45) Date of publication and mention of the grant of the patent: **17.04.2019**
(21) Application number: 12725979.4
(22) Date of filing: 23.05.2012
(51) Int. Cl.: G01D 5/26, G01D 5/353, G01L 1/24

(54) **OPTICAL SENSOR SYSTEMS AND METHODS**
OPTISCHE SENSORSYSTEME UND VERFAHREN
SYSTÈMES ET PROCÉDÉS DE DÉTECTION OPTIQUE

(30) Priority: 27.06.2011 US 201113149369
(43) Date of publication of application: 30.04.2014
(73) Proprietor: The Boeing Company, Chicago, IL 60606-1596 (US)
(72) Inventor: CARRALERO, Michael, A., Huntington Beach, CA 92649 (US); LARSEN, Ty, A., Everett, WA 98203 (US)
(74) Representative: Shipp, Nicholas
(86) International application number: PCT/US2012/039218
(87) International publication number: WO 2013/002921

(56) References cited:
- EP-A1- 1 324 099
- WO-A1-2012/024043
- US-A1- 2007 065 077
- US-A1- 2011 097 031
- US-A1- 2011 110 621
- IL WOONG JUNG ET AL: "Photonic crystal fiber tip sensor for precision temperature sensing", LEOS 2009 -22ND ANNUALL MEETING OF THE IEEE LASERS AND ELECTRO-OPTICS SOCIETY. LEO 2009 - 4-8 OCT. 2009 - BELEK-ANTALYA, TURKEY, IEEE, PISCATAWAY, NJ, USA, 4 October 2009 (2009-10-04), pages 761-762, XP031572691, ISBN: 978-1-4244-3680-4

## Description

### FIELD OF THE DISCLOSURE

The present disclosure is generally related to optical sensors.

### BACKGROUND

In many systems multiple parameters may be sensed in order to monitor operating conditions, such as operating temperatures, pressures, fluid levels, and so forth. Installing sensors and associated wiring may add considerable weight and expense to a system. When multiple sensors are used in a particular area, multiple wires may be used to connect the sensors to a control system that gathers information from the sensors. Installing the multiple sensors may require routing many wires through structures which can be a costly and time consuming process. For example, aircraft fuel tank sensing systems may include multiple sensors inside a fuel tank. Each sensor may be connected to a control system via a wire. Further, each sensor may be associated with a tank penetration to route wires from the sensor to the control system. Since the control system may be distant from the fuel tank, each wire may also be routed through other aircraft structures, such as bulkheads. Providing penetrations for the wiring (in the fuel tank and in the other aircraft structures) as well as routing the wiring can be challenging both during aircraft design and in manufacturing and maintenance of the aircraft. Additionally, the wiring and sensors themselves may add considerable cost and weight to the aircraft.

EP 1 324 099 discloses a fiber coupling device comprising fixing parts, to which the respective ends of two optical fibers and are fixed, photonic crystal, disposed inside the light path of light that propagates across the abovementioned ends, and external force application means, which applies an external force to photonic crystal. When an external force is applied by external force application means to photonic crystal while light is being propagated inside one optical fiber, the photonic band gap of photonic crystal changes and light of a wavelength that is in accordance with this photonic band gap is output from the other optical fiber.

### SUMMARY

Optical sensors may have certain advantages over electrical sensors. For example, optical sensors are generally not sensitive to electromagnetic interference. Also, optical sensors may be relatively small as compared to certain legacy sensors. Particular optical sensor assemblies and optical sensor systems disclosed herein may be relatively inexpensive and may provide highly accurate sensing. For example, an optical sensor system may use encapsulated multimode fiber arrays with fiber tip sensors to measure temperature, pressure, or other parameters simultaneously. Such a system may be simple in configuration, flexible, highly tolerant to light source fluctuations, and inexpensive. Additionally, the system can achieve high accuracy while operating in an adverse environment. For example, disclosed optical sensors may be used in aircraft engines and fuel tanks where conditions such as heat and safety concerns may lead to difficulties in applying electrical sensing systems. Additionally, the optical sensors may be considerably smaller than electrical sensors and may use less power. Further, since the optical sensors are not sensitive to electromagnetic interference, no metallic shielding is required and considerable cost and weight savings may be achieved.

In a particular embodiment, an optical sensor assembly includes a substrate, a first photonic crystal sensor coupled to the substrate, and a second photonic crystal sensor coupled to the substrate. The first photonic crystal sensor is configured to reflect a first portion of incident light corresponding to a first reflection spectrum. A first wavelength range of the first reflection spectrum changes in response to changes in a first sensed parameter. The second photonic crystal sensor is configured to reflect a second portion of the incident light corresponding to a second reflection spectrum. A second wavelength range of the second reflection spectrum changes in response to changes in a second sensed parameter which is different from the first sensed parameter. The first reflection spectrum and the second reflection spectrum may be different and parameter values of the first and second sensed parameters are determinable from the first and second reflected spectrums respectively.

In a particular embodiment, an optical sensor system includes an optical fiber and an optical sensor assembly coupled to a tip of the optical fiber. The optical sensor assembly includes a first photonic crystal sensor configured to exhibit a first reflection spectrum that changes responsive to a first sensed parameter and a second photonic crystal sensor configured to exhibit a second reflection spectrum that changes responsive to a second sensed parameter. The first reflection spectrum and the second reflection spectrum may be different.

In a particular embodiment, a method includes applying light to a first end of an optical fiber. Light reflected by a first photonic crystal sensor coupled to a second end of the optical fiber and a second photonic crystal sensor coupled to the second end of the optical fiber is detected. The first photonic crystal sensor exhibits a first reflection spectrum that changes responsive a first sensed parameter and the second photonic crystal sensor exhibits a second reflection spectrum that changes responsive a second sensed parameter which is different from the first sensed parameter. The method also includes determining a parameter value of the first sensed parameter and the second sensed parameter based on the first and second reflected spectrums of the detected light respectively.

The features, functions, and advantages that have been described can be achieved independently in various embodiments or may be combined in yet other embodiments, further details of which are disclosed with reference to the following description and drawings.

### BRIEF DESCRIPTION OF THE DRAWINGS

FIG. 1 is a block diagram of a first particular embodiment of an optical sensor system;
FIG. 2 is a simplified perspective drawing of a first particular embodiment of an optical sensor assembly;
FIG. 3 is a simplified perspective drawing of a second particular embodiment of an optical sensor assembly;
FIG. 4 is a simplified perspective drawing of a third particular embodiment of an optical sensor assembly;
FIG. 5 is a diagram of a second particular embodiment of an optical sensor system that is deployed in an aircraft;
FIG. 6 is flow chart of a particular embodiment of a method of determining a parameter value using an optical sensor system; and
FIG. 7 is block diagram of a computer system adapted to determine a parameter value using an optical sensor system.

### DETAILED DESCRIPTION

Certain sensing systems utilize multiple, independently-targeted, electrical or electromagnetic sensor packages. For example, separate sensors may be used for sensing pressure, temperature, acceleration, and so forth. In certain applications, such as aircraft fuel tanks, using separate sensors for each sensed parameter can cause significant complications. For example, each sensor may be coupled by a wire to a control system and may communicate information about a sensed parameter to the control system using electrical signals. Routing the wiring from each sensor to the control system may require structural penetrations and tank penetrations which can be a considerable design challenge. For example, each structural penetration and tank penetration may introduce safety considerations to be addressed. Further, each structural penetration and tank penetration has an associated installation time and cost. In newer aircraft that utilize carbon fiber skins and structures, shielding that was associated with metal skins and structures is no longer available. Thus, additional compilations and costs may arise due to designing and installing shielding and isolation systems to provide shielding for wiring and sensors.

Optical technologies and optical sensors may be used to avoid some of these concerns with electrical sensor systems. For example, an optical photonic crystal sensor device may be significantly smaller and lighter than a corresponding electrical sensor. Additionally, electromagnetic interference is not a concern for optical technologies; thus, shielding and isolation concerns may be significantly reduced. Further, embodiments disclosed herein enable sensing from multiple optical sensors via a single optical fiber which reduces a number of structural penetrations and tank penetrations to install multiple sensor systems into a particular area. Using a single optical fiber rather than multiple optical fibers or multiple electrical connections may significantly reduce installation and repair costs as well as weight of a sensor system. Accordingly, cost, reliability, installation time, and other factors may be improved by using optical sensor systems, especially optical sensor systems that include multiple photonic crystal sensors attached to a single optical fiber.

In addition, photonic crystals may be substantially chemically and electrically inert and durable. Thus, photonic crystal sensors may be able to operate reliably in harsh environments, such as high temperature environments, chemically aggressive environments, and high shock or acceleration or vibration environments. For example, glass optical fibers and sensing nodes of the photonic crystals may operate in extreme temperatures upwards of 900 degrees Celsius. In less extreme environments, lower cost polymer materials may be used for the optical fibers which may reduce costs and be lighter weight.

An optical photonic crystal sensor includes a material that is structured to respond to changes in its environment in a manner that modifies a refractive index of the material. This change in the refractive index may result in frequency shifts in the reflection spectrum of the optical photonic crystal sensor. Thus, the reflection spectrum of the optical photonic crystal sensor may be responsive to a parameter sensed within the environment. For example, depending on the configuration of the optical photonic crystal sensor, the refractive index of the optical photonic crystal sensor may shift in response to temperature changes, pressure changes, vibration, acceleration, magnetic forces, etc. Accordingly, by supplying light to an optical photonic crystal sensor and detecting a reflection spectrum from the optical photonic crystal sensor an indication of values of one or more sensed parameters in the environment of the optical photonic crystal sensor may be determined.

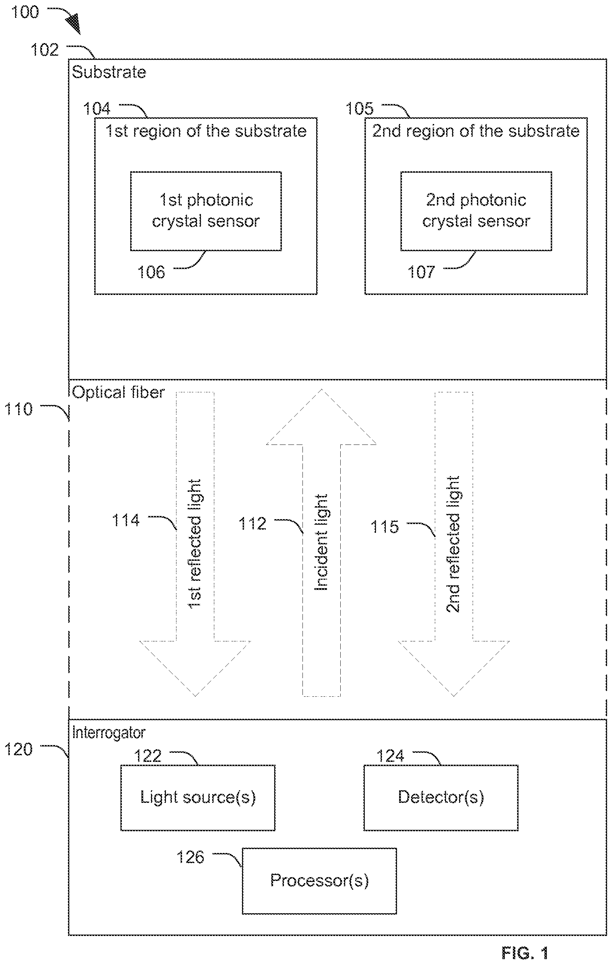

FIG. 1 is a block diagram of a first particular embodiment of an optical sensor system 100. The optical sensor system 100 may include a substrate 102 coupled to an optical fiber 110. The substrate 102 may include a plurality of regions 104 and 105 corresponding to separate physical locations on the substrate 102. A first photonic crystal sensor 106 may be coupled to or located within a first region 104 of the substrate 102 and a second photonic crystal sensor 107 may be coupled to or located within a second region 105 of the substrate 102. In a particular embodiment, the photonic crystal sensors 106-107 are formed as part of the substrate 102. For example, the substrate 102 may be etched, ablated, or otherwise processed to form the first photonic crystal sensor 106, the second photonic crystal sensor 107, or both. In another particular embodiment, the photonic crystal sensors 106-107 are formed separately from the substrate 102. and are subsequently mechanically affixed to the substrate 102 (e.g., using an adhesive or a manufacturing process).

The first photonic crystal sensor 106 may be configured to reflect a first portion of incident light that corresponds to a first reflection spectrum of the first photonic crystal sensor 106. A wavelength range of the first reflection spectrum may change in response to changes in a first sensed parameter. For example, the first photonic crystal sensor 106 may have a first structure that is formed of two or more materials, such as a first material that has a first refractive index and a second material that has a second refractive index. In response to changes in the position or orientation of the two or more materials (e.g., due to pressure, temperature, acceleration, vibration, magnetic forces or other physical influences or forces), the refractive index (and the reflection spectrum) of the first photonic crystal sensor 106 may change. To illustrate, the first structure of the first photonic crystal sensor 106 may include holes or other "defects" (i.e., irregularities) within the first material that are filled with the second material. For example, the first material may be a solid, glass or crystalline material and the second material may be a gas, a liquid or another solid (e.g., air, an ambient gas or another material). Since the two or more materials have different refractive indices, changes in the structure of the first material may cause changes in the relative refractive index of the two materials, resulting in an overall shift in the first reflection spectrum of the first photonic crystal sensor 106.

Similarly, the second photonic crystal sensor 107 may have a second structure that is formed of two or more materials. The two or more materials used for the second photonic crystal sensor 107 may be the same materials as used for the first photonic crystal sensor 106, or the second photonic crystal sensor 107 may include one or more materials that are different from materials of the first photonic crystal sensor 106. The second photonic crystal sensor 107 may be configured to reflect a second portion of incident light that corresponds to a second reflection spectrum. A wavelength range of the second reflection spectrum may change in response to a second sensed parameter (e.g., pressure, temperature, acceleration, vibration, magnetic force, etc.). In a particular embodiment, the first reflection spectrum of the first photonic crystal sensor 106 may be different than the second reflection spectrum of the second photonic crystal sensor 107. That is, the first photonic crystal sensor 106 and the second photonic crystal sensor 107 may reflect different wavelengths of light. The first sensed parameter and the second sensed parameter are different parameters.

The optical fiber 110 may be coupled to an interrogator system 120. The interrogator system 120 may include one or more light sources 122 and one or more detectors 124. The one or more light sources 122 may provide incident light 112 that may be applied to the first photonic crystal sensor 106 and to the second photonic crystal sensor 107 via the optical fiber 110. In a particular embodiment, the incident light 112 may be applied to the first and second photonic crystal sensors 106-107 substantially simultaneously. For example, the one or more light sources 122 may simultaneously emit light in a wavelength corresponding to the first reflection spectrum of the first photonic crystal sensor 106 and light in a wavelength corresponding to the second reflection spectrum of the second photonic crystal sensor 107. For example, the one or more light sources 122 may include a broad spectrum light source. In another example, the one or more light sources 122 may include two or more separated relatively narrow spectrum light sources, such as laser light sources. The one or more light sources 122, the interrogator system 120, the optical fiber 110, or the substrate 102 may include a filter (not shown) that filters out portions of the spectrum of the incident light 112 that are not used or are not needed by the photonic crystal sensors 106, 107.

The first photonic crystal sensor 106 may reflect first reflected light 114 responsive to the first sensed parameters. Since the reflection spectrum of the first photonic crystal sensor 106 changes in response to the first sensed parameter, the first reflected light 114 may have a wavelength that is indicative of a value of the first sensed parameter. The second photonic crystal sensor 107 may reflect second reflected light 115. The second reflected light 115 may have a second wavelength that is indicative of a value of the second sensed parameter.

The one or more detectors 124 may detect the first reflected light 114 and the second reflected light 115. The one or more detectors 124 may be coupled to one or more processors 126. The one or more processors 126 may receive information indicative of the wavelength of the first reflected light 114, the second reflected light 115, or both, from the one or more detectors 124. In response to the information provided by the detectors 124, the processor 126 may determine a parameter value of at least one of the first sensed parameter and the second sensed parameter.

In a particular embodiment, the sensed parameters may include temperature, pressure, acceleration, vibration, magnetic force, one or more other parameters, or a combination thereof. Although two photonic crystal sensors 106, 107 are shown in FIG. 1, the optical sensor system 100 may include more than two photonic crystal sensors, and the photonic crystal sensors of the optical sensor system 100 may be configured to sense one or more sensed parameters. In a particular embodiment, the first photonic crystal sensor 106 is responsive to the same sensed parameter as the second photonic crystal sensor 107. In another particular embodiment, the first photonic crystal sensor 106 is responsive to a different sensed parameter than the second photonic crystal sensor 107. When more than two photonic crystal sensors are present, one or more of the photonic crystal sensors is responsive to a different sensed parameter than one or more other photonic crystal sensors. Additionally, the optical fiber 110 may include a multimode optical fiber that is adapted to transmit multiple wavelengths of light including wavelengths of the incident light 112, the first reflected light 114, the second reflected light 115, other wavelengths, or a combination thereof.

In a particular embodiment, the first reflection spectrum of the first photonic crystal sensor 106 may change in response to the first sensed parameter and in response to the second sensed parameter. For example, when the first photonic crystal sensor 106 is a pressure sensor. The reflection spectrum of the pressure sensor may change as a result of changes in physical dimensions of the structure of the first photonic crystal sensor 106 caused by changes in pressure. The second photonic crystal sensor 107 may be a temperature sensor. The reflection spectrum of the temperature sensor may change as a result of changes in physical dimensions of the structure of the second photonic crystal sensor 107 caused by changes in temperature. In this example, a change in temperature of the first photonic crystal sensor 106 may also change the physical dimensions of the structure of the first photonic crystal sensor 106. This can introduce some error in the pressure sensed by the first photonic crystal sensor 106. In this embodiment, the processor 126 may have access to calibration relationships that may be used by the processor 126 to determine a value of the first sensed parameter based on the first reflected light 114 from the first photonic crystal sensor 106, the second reflected light 115 from the second photonic crystal sensor 107, and the calibration relationship that relates changes in the first reflection spectrum to changes in the first sensed parameter and changes in the second sensed parameter. For example, by comparing information about changes in the first reflection spectrum and changes in the second reflection spectrum, the processor 126 may remove a contribution of the temperature change from a determined pressure value.

In a particular embodiment, at least a portion of the optical sensor system 100 may be disposed within a fuel tank of an aircraft. In this embodiment, light reflected by the first photonic crystal sensor 106 and the second photonic crystal sensor 107 may be used to provide information that is indicative of quantity of fuel present in the fuel tank. For example, by sensing pressure of fuel over the sensor, an estimate of the quantity of fuel may be determined (e.g., based on the density of the fuel or based on a calibration relationship, such as a look-up table). A more accurate estimate may be determined by taking multiple pressure readings (potentially at different locations within the fuel tank), by sensing temperature of the fuel as well as pressure to more accurately estimate density of the fuel, or both. Thus, the optical sensor system 100 may be used to avoid some of the concerns related to use of electrical sensor systems in a fuel tank. For example, the optical sensor system 100 may be significantly smaller and lighter than a corresponding electrical sensor system. Since a single optical fiber (e.g., the optical fiber 110) can be used to connect multiple photonic crystal sensors (e.g., the first photonic crystal sensor 106 and the second photonic crystal sensor 107) to the interrogator system 120, a number of structural penetrations and tank penetrations that may be used to install optical sensor system 100 may be reduced. Additionally, using the single optical fiber 110 may reduce installation and repair costs as well as weight of the optical sensor system 100 relative to an electrical sensor system. Thus, cost, reliability, installation time, and other factors may be improved by using the optical sensor system 100. The optical sensor system 100 may also be substantially immune from electromagnetic interference. Additionally, the optical sensor system 100 may operate reliably in harsh environments, such as high temperature environments, chemically aggressive environments, and high shock or acceleration or vibration environments.

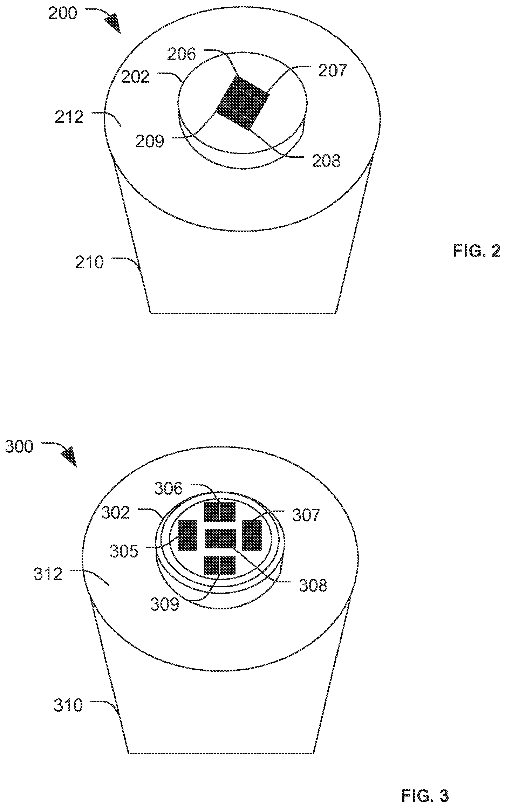

FIG. 2 is a simplified perspective drawing of a first particular embodiment of an optical sensor assembly 200. The optical sensor assembly 200 includes an optical fiber 210 having a tip or end 212. A substrate 202 may be coupled to the end 212 of the optical fiber 210. The substrate 202 may include one or more photonic crystal sensors. For example, the substrate 202 may divided into quadrants (or other spatial regions) with each quadrant associated with a separate optical photonic crystal sensor, such as a first photonic crystal sensor 206, a second photonic crystal sensor 207, a third photonic crystal sensor 208, and a fourth photonic crystal sensor 209.

Each of the photonic crystal sensors 206-209 may be associated with a different reflection spectrum. The reflection spectrum of each of the photonic crystal sensors 206-209 may change responsive to one or more sensed parameters. For example, the reflection spectra of the first photonic crystal sensor 206 and the second photonic crystal sensor 207 may each change responsive to the same sensed parameter, such as temperature. In another example, the reflection spectra of the third photonic crystal sensor 208 and the fourth photonic crystal sensor 209 may each change responsive to a second sensed parameter, such as pressure. Information descriptive of changes in the sensed parameters may be transmitted via the optical fiber 210 by way of the reflection spectra of the photonic crystal sensors 206-209. Information from the one of the photonic crystal sensors 206-209 may be differentiated from information from another of the photonic crystal sensors 206-209 based on the different wavelengths of the reflection spectra from the photonic crystal sensors 206-209. Thus, the optical sensor assembly 200 may include two or more photonic crystal sensors that together provide an indication one or more sensed parameters.

FIG. 3 is a simplified perspective drawing of a second particular embodiment of an optical sensor assembly 300. The optical sensor assembly 300 includes an optical fiber 310 having a tip or end 312. A substrate 302 may be coupled to the end 312 of the optical fiber 310. Two or more photonic crystal sensors, such as a first photonic crystal sensor 305, a second photonic crystal sensor 306, a third photonic crystal sensor 307, a fourth photonic crystal sensor 308, and a fifth photonic crystal sensor 309, may be coupled to the substrate 302. The optical sensor assembly 300 illustrates a different physical arrangement of the photonic crystal sensors 305-309 relative to the arrangement of the photonic crystal sensors 206-209 of the optical sensor assembly 200 of FIG. 2. The arrangement of the photonic crystal sensors 305-309 enables the optical sensor assembly 300 to include more photonic crystal sensors than does the quadrant based arrangement of the optical sensor assembly 200 of FIG. 2. In other embodiments, an optical sensor assembly may include more than the five photonic crystal sensors 305-309 shown in FIG. 3 or fewer than five photonic crystal sensors.

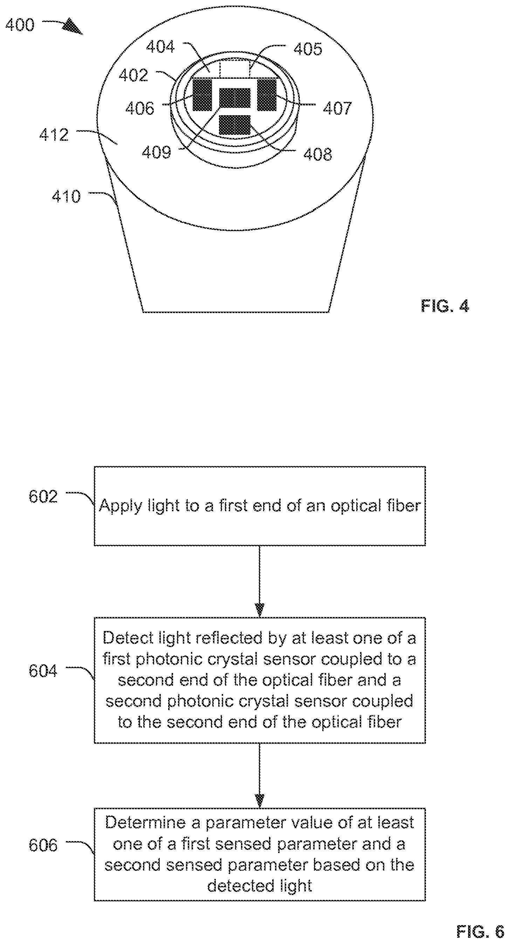

FIG. 4 is a simplified perspective drawing of a third particular embodiment of an optical sensor assembly 400. The optical sensor assembly 400 includes an optical fiber 410 having a tip or end 412. A substrate 402 may be coupled to the end 412 of the optical fiber 410. Two or more photonic crystal sensors, such as a first photonic crystal sensor (e.g., reference photonic crystal sensor 405), a second photonic crystal sensor 406, a third photonic crystal sensor 407, a fourth photonic crystal sensor 408, and a fifth photonic crystal sensor 409, may be coupled to the substrate 402. The optical sensor assembly 400 illustrates a different physical arrangement of the photonic crystal sensors 405-409 relative to the arrangement of the photonic crystal sensors 206-209 of the optical sensor assembly 200 of FIG. 2 and relative to the arrangement of the photonic crystal sensors 305-309 of the optical sensor assembly 300 of FIG. 3. For example, the optical sensor assembly 400 includes a reference photonic crystal sensor 405 which may be at least partially isolated from an ambient environment of the optical sensor assembly 400. For example, the reference photonic crystal sensor 405 may be encapsulated or covered (e.g., by a covering layer 404).

The reference photonic crystal sensor 405 may act as a reference relative to one or more of the other photonic crystal sensors 406-409. The covering layer 404 may at least partially shield the reference photonic crystal sensor 405 from the ambient environment to enable differentiation of various sensed parameters. For example, the reference photonic crystal sensor 405 may be subject to temperature in the ambient environment but may be at least partially shielded from pressure changes in the ambient environment. Thus, information from the reference photonic crystal sensor 405 may be used to isolate temperature and pressure affects sensed by one or more of the other photonic crystal sensors 406-409. For example, the second photonic crystal sensor 406 may have a reflection spectrum that changes responsive to a first sensed parameter and is responsive to a second sensed parameter. The third photonic crystal sensor 407 may likewise have a reflection spectrum that changes responsive to the first sensed parameter and is responsive to the second sensed parameter. The referenced photonic crystal sensor 405 may have a reflection spectrum that changes responsive only to the second sensed parameter. Thus, the reference photonic crystal sensor 405 may be used to determine a parameter value of the first sensed parameter independently of the second sensed parameter, to determine a parameter value of the second sensed parameter independently of the first sensed parameter, or both, by isolating affects of one sensed parameter from affects from the other sensed parameter.

FIG. 5 is a block diagram of a second particular embodiment of an optical sensor system 500. In the embodiment illustrated in FIG. 5, the optical sensor system 500 is disposed on a portion of an aircraft 502. The optical sensor system 500 may include an interrogator system 504 coupled to one or more optical fibers, such as an optical fiber 506. The optical fiber 506 may have a first end with a tip that is coupled to an optical sensor assembly 508. For example, the optical sensor assembly 508 may disposed in a location from which sensing data is to be gathered, such as within a fuel tank 512 of the aircraft 502, within an engine of the aircraft 502, external to the aircraft 502, etc.

The optical sensor assembly 508 may include a first photonic crystal sensor 510 and a second photonic crystal sensor 511. The first photonic crystal sensor 510 may be configured to exhibit a first reflection spectrum that changes responsive to a first sensed parameter. The second photonic crystal sensor 511 may be configured to exhibit a second reflection spectrum that changes responsive to a second sensed parameter. The first sensed parameter and the second sensed parameter are different. For example, the first photonic crystal sensor 510 and the second photonic crystal sensor 511 may sense pressure within the aircraft fuel tank 512. In another example, the first photonic crystal sensor 510 may sense pressure and the second photonic crystal sensor 511 may sense temperature within the aircraft fuel tank 512.

The reflection spectra of the first photonic crystal sensor 510 and the second photonic crystal sensor 511 may be different. Thus, the interrogator system 504 may identify and differentiate information from the photonic crystal sensors 510, 511 based on a wavelength of reflected light from the optical sensor assembly 508. The optical sensor system 500 may enable estimation of the quantity of fuel present in the fuel tank 512 based on light reflected to a light detector of the interrogator system 504. Thus, light associated with multiple sensors within the fuel tank 512 may be reduced as well as a number of penetrations required to enable sensors to provide sensing information to onboard systems may be reduced since multiple sensors may provide information via a single optical fiber 506. The optical sensor system 500 may be used to avoid some of the concerns with electrical sensor systems. For example, the optical sensor system 500 may be significantly smaller and lighter than a corresponding electrical sensor system. Since a single optical fiber (e.g., the optical fiber 506) can be used to connect multiple photonic crystal sensors (e.g., the first photonic crystal sensor 510 and the second photonic crystal sensor 511) to the interrogator system 504, a number of structural penetrations and tank penetrations to install optical sensor system 500 may be reduced. Additionally, using the single optical fiber 506 may reduce installation and repair costs as well as weight of the optical sensor system 500 relative to an electrical sensor system. Thus, cost, reliability, installation time, and other factors may be improved by using the optical sensor system 500. The optical sensor system 500 may also be substantially immune from electromagnetic interference. Additionally, the optical sensor system 500 may operate reliably in harsh environments, such as high temperature environments, chemically aggressive environments, and high shock or acceleration or vibration environments.

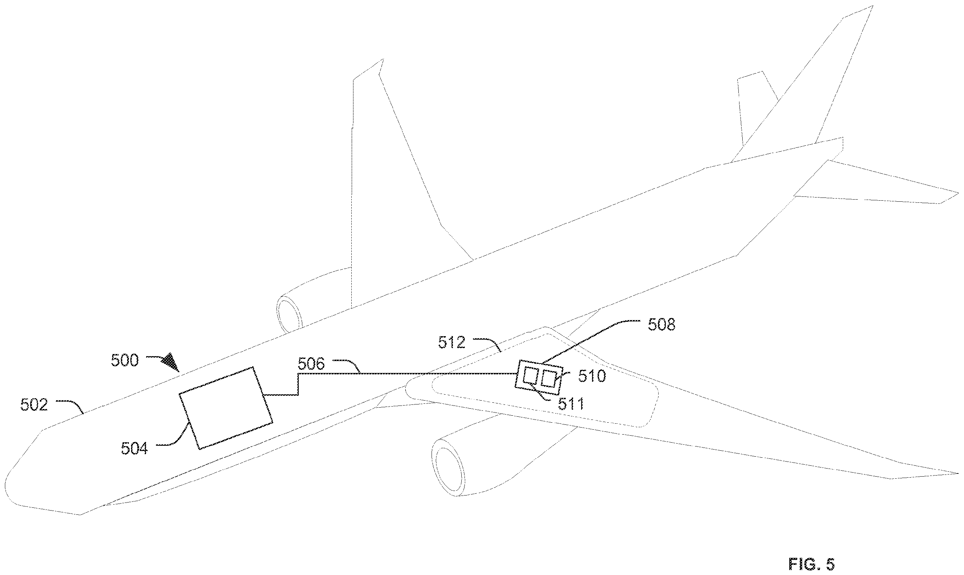

FIG. 6 is flow chart of a particular embodiment of a method of determining a parameter value using an optical sensor system. The method may include, at 602, applying light to a first end of an optical fiber. For example, one or more light sources of an interrogator system, such the one or more light sources 122 of the interrogator system 120 of FIG. 1, may apply light having one or more particular wavelengths to the optical fiber 110 as incident light 112.

In response to the light applied to the first end of an optical fiber, light may be detected, at 604. The detected light may be reflected by a first photonic crystal sensor coupled to a second end of the optical fiber, by a second photonic crystal sensor coupled to the second end of the optical fiber, or by both the first photonic crystal sensor and the second photonic crystal sensor. As previously explained, more than two photonic crystal sensors may be coupled to the second end of the optical fiber, such as the four photonic crystal sensors 206-209 of FIG. 2, the five photonic crystal sensors 305-309 of FIG. 3, or the four photonic crystal sensors 406-409 and the reference photonic crystal sensor 405 of FIG. 4. Thus, the detected light may be reflected from more than two photonic crystal sensors.

Using two photonic crystal sensors as an example, the first photonic crystal sensor may be configured to exhibit a first reflection spectrum that changes responsive to a first sensed parameter. The second photonic crystal sensor may be configured to exhibit a second reflection spectrum that changes responsive to a second sensed parameter. The first sensed parameter and the second sensed parameter are different. A wavelength of the first reflection spectrum and a wavelength of the second reflection spectrum may be different.

The method may also include, at 606, determining a parameter value of at least one of the first sensed parameter and the second sensed parameter based on the detected light. For example, the parameter value may be determined based on light reflected by the first photonic crystal sensor, based on light reflected by the second photonic crystal sensor, or based on both. For example, the first photonic crystal sensor may exhibit a change responsive to the first sensed parameter and in responsive to the second sensed parameter. Light reflected by the second photonic crystal sensor may be used to determine a value of the first sensed parameter by providing information about an affect of the second sensed parameter on the first photonic crystal sensor. In another example, the system may include a third sensor. The third sensor may be another photonic crystal sensor, such as the reference photonic crystal system 405 of FIG. 4, or may be another type of sensor (such as a non-optical sensor, e.g., an electrical sensor). The third sensor may provide information about the first sensed parameter, the second sensed parameter, or both. Thus, the parameter value may be determined based on information from the third sensor and based on light reflected by the first photonic crystal sensor. Additionally, light reflected by the second photonic crystal sensor may be used in determining the parameter value. In a particular embodiment, the first reflection spectrum of the first photonic crystal sensor does not change significantly responsive to changes in the second sensed parameter. For example, the first photonic crystal sensor may be a reference sensor that is physically or mechanically isolated for affects of the second sensed parameter. Thus, the first reflection spectrum may be independent of the changes in the second sensed parameter.

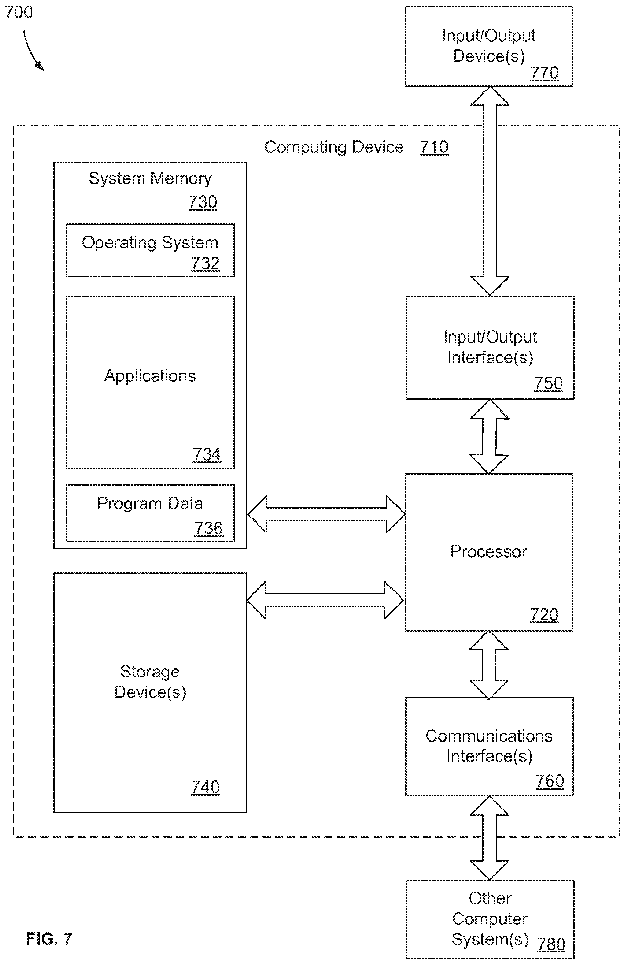

FIG. 7 is a block diagram of a general purpose computer system 700 operable to perform computer-implemented methods or to process computer-executable instructions to process data from one or more sensors, such as the photonic crystal sensors 106-107 of FIG. 1, the photonic crystal sensors 206-209 of FIG. 2, the photonic crystal sensors 305-309 of FIG. 3, the photonic crystal sensors 406-409 of FIG. 4, the reference sensor 405 of FIG. 4, the photonic crystal sensors 510-511 of FIG. 5, other sensors, or any combination thereof. For example, the computer system 700 may be include or be included within the interrogator system 120 of FIG. 1 or the interrogator system 504 of FIG. 5.

In an illustrative embodiment, a computing device 710 of the computing system 700 may include at least one processor 720. The processor 720 may be configured to execute instructions to implement a method of determining a parameter value using an optical sensor system, such as the method described with reference to FIG. 6. The processor 720 may communicate with a system memory 730, one or more storage devices 740, and one or more input/output devices 770, via input/output interfaces 750.

The system memory 730 may include volatile memory devices, such as random access memory (RAM) devices, and nonvolatile memory devices, such as read-only memory (ROM), programmable read-only memory, and flash memory. The system memory 730 may include an operating system 732, which may include a basic input/output system (BIOS) for booting the computing device 710 as well as a full operating system to enable the computing device 710 to interact with users, other programs, and other devices. The system memory 730 may also include one or more application programs 734.

The processor 720 also may communicate with one or more storage devices 740. The storage devices 740 may include nonvolatile storage devices, such as magnetic disks, optical disks, or flash memory devices. In an alternative embodiment, the storage devices 740 may be configured to store the operating system 732, the applications 734, the program data 736, or any combination thereof. The processor 720 may communicate with the one or more communication interfaces 760 to enable the computing device 710 to communicate with other computing systems 780. In a particular embodiment, the storage devices 740 may store information that is used by the processor to determine a parameter value using an optical sensor system. For example, the storage devices 740 may include a calibration relationship that relates changes in one or more reflection spectra to changes in sensed parameters.

As illustrated in the Figures 1-7 and the accompanying text above, an optical sensor system 100, 500 is disclosed including an optical fiber 110, 510, and an optical sensor assembly 200, 300, 400, 508 coupled to a tip of the optical fiber 110, 210, 310, 410, 506. The optical sensor assembly 200, 300, 400, 508 may include a first photonic crystal sensor 106 configured to exhibit a first reflection spectrum that changes responsive to a first sensed parameter, and a second photonic crystal sensor 107 configured to exhibit a second reflection spectrum that changes responsive to a second sensed parameter, wherein the first reflection spectrum and the second reflection spectrum are different. In one variant, the optical fiber 110, 210, 310, 410, 506 is a multimode optical fiber. In yet another variant, a light source may be coupled to the optical fiber, wherein the light source provides light to the optical sensor assembly 200, 300, 400, 508 via the optical fiber 10, 210, 310, 410, 506 and wherein at least a portion of the light provided by the light source 122 has a wavelength within at least one of the first reflection spectrum and the second reflection spectrum. In yet another example, a light detector 124 may be coupled to the optical fiber 110, 210, 310, 410, 506 and configured to detect light reflected by at least one of the first photonic crystal sensor 106 and the second photonic crystal sensor 107.

In one alternative, a processor 126, 720 may be coupled to the light detector 124 and configured to determine a value of the first sensed parameter and a value of the second sensed parameter based on the light detected by the light detector 124. In yet another alternative, the first reflection spectrum of the first photonic crystal sensor 106 further changes in response to changes in the second sensed parameter, wherein the optical sensor system 100, 500 further comprises a processor 126, 720 to determine a value of the first sensed parameter based on light reflected by the first photonic crystal sensor 106, light reflected by the second photonic crystal sensor 107 and a calibration relationship that relates changes in the first reflection spectrum to changes in the first sensed parameter and changes in the second sensed parameter. In one example, the optical sensor assembly 200, 300, 400, 508 may be disposed within a fuel tank 512 of an aircraft and is configured to reflect light to a light detector 124 onboard the aircraft to estimate a quantity of fuel present in the fuel tank 512.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. For example, method steps may be performed in a different order than is shown in the figures or one or more method steps may be omitted. Accordingly, the disclosure and the figures are to be regarded as illustrative rather than restrictive.

Moreover, although specific embodiments have been illustrated and described herein, it should be appreciated that any subsequent arrangement designed to achieve the same or similar results may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, the claimed subject matter may be directed to less than all of the features of any of the disclosed embodiments.

## Claims

1. An optical sensor assembly comprising:
a substrate (102, 202, 302, 402);
a first photonic crystal sensor (106) coupled to the substrate (102, 202, 302, 402), the first photonic crystal sensor (106) configured to reflect a first portion of incident light corresponding to a first reflection spectrum, wherein a first wavelength range of the first reflection spectrum changes in response to changes in a first sensed parameter; and
a second photonic crystal sensor (107) coupled to the substrate (102, 202, 302, 402), the second photonic crystal sensor (107) configured to reflect a second portion of the incident light corresponding to a second reflection spectrum, wherein a second wavelength range of the second reflection spectrum changes in response to changes in a second sensed parameter which is different from the first sensed parameter;
wherein the first reflection spectrum and the second reflection spectrum are different and parameter values of the first and second sensed parameters are determinable from the first and second reflection spectra respectively.

2. The optical sensor assembly of claim 1, wherein:
the first photonic crystal sensor (106) has a first structure formed of a first material with a first refractive index and a second material with a second refractive index; and
the second photonic crystal sensor (107) has a second structure formed of the first material and the second material, the first structure different than the second structure.

3. The optical sensor assembly of claim 1 or 2, wherein:
the first photonic crystal sensor (106) has a first structure formed with two or more materials having two or more different refractive indices; and
the second photonic crystal sensor (107) has a second structure formed with at least one material that is different from the two or more materials of the first structure.

4. The optical sensor assembly of any of claims 1-3, wherein the first sensed parameter includes one of temperature, pressure, acceleration and vibration.

5. The optical sensor assembly of any of the preceding claims, wherein the first photonic crystal sensor (106) is coupled to a first region (104) of the substrate (102, 202, 302, 402) and the second photonic crystal sensor (107) is coupled to a second region (105) of the substrate (102, 202, 302, 402), wherein the first region (104) is different from the second region (105).

6. The optical sensor assembly of any of the preceding claims, wherein the incident light is applied substantially simultaneously to the first photonic crystal sensor (106) and to the second photonic crystal sensor (107) via an optical fiber (110, 210, 310, 410, 506) when the substrate (102, 202, 302, 402) is coupled to an end of the optical fiber (110, 210, 310, 410, 506).

7. A method comprising:
applying light to a first end of an optical fiber;
detecting light reflected by a first photonic crystal sensor (106) coupled to a second end of the optical fiber and a second photonic crystal sensor (107) coupled to the second end of the optical fiber, wherein the first photonic crystal sensor (106) exhibits a first reflection spectrum that changes responsive a first sensed parameter and the second photonic crystal sensor (107) exhibits a second reflection spectrum that changes responsive a second sensed parameter which is different from the first sensed parameter; and
determining parameter values of the first sensed parameter and the second sensed parameter based on the first and second reflection spectra of the detected light respectively.

8. The method of claim 7, wherein the light applied to the optical fiber (110, 210, 310, 410, 506) has a wavelength range that includes a first wavelength range corresponding to the first reflection spectrum and a second wavelength range corresponding to the second reflection spectrum.

9. The method of any of claims 7 or 8, wherein the first reflection spectrum of the first photonic crystal sensor (106) does not change significantly in response to changes in the second sensed parameter.

10. The method of claim 7, wherein the first reflection spectrum of the first photonic crystal sensor (106) changes responsive to changes in the second sensed parameter, and wherein determining the parameter value includes using light reflected by the first photonic crystal sensor (106) and light reflected by the second photonic crystal sensor (107) to determine a value corresponding to the first sensed parameter.

11. The method of any of claims 7 or 8, wherein the first reflection spectrum of the first photonic crystal sensor (106) changes responsive to changes in the second sensed parameter, and wherein the method further comprises receiving information from a third sensor, wherein the parameter value is determined based on the information from the third sensor and based on light reflected by the first photonic crystal sensor (106).

## Patentansprüche

1. Optische Sensoranordnung, aufweisend:
ein Substrat (102, 202, 302, 402);
einen ersten Sensor (106) mit photonischen Kristallen, der an das Substrat (102, 202, 302, 402) gekoppelt ist, wobei der erste Sensor (106) mit photonischen Kristallen dazu ausgelegt ist, einen ersten Teil von einfallendem Licht zu reflektieren,
der einem ersten Reflexionsspektrum entspricht, wobei sich ein erster Wellenlängenbereich des ersten Reflexionsspektrums in Ansprechen auf Veränderungen eines ersten erfassten Parameters verändert; und
einen zweiten Sensor (107) mit photonischen Kristallen, der an das Substrat (102, 202, 302, 402) gekoppelt ist, wobei der zweite Sensor (107) mit photonischen Kristallen dazu ausgelegt ist, einen zweiten Teil des einfallenden Lichts zu reflektieren, der einem zweiten Reflexionsspektrum entspricht,
wobei sich ein zweiter Wellenlängenbereich des zweiten Reflexionsspektrums in Ansprechen auf Veränderungen eines zweiten erfassten Parameters verändert, der sich von dem ersten erfassten Parameter unterscheidet;
wobei sich das erste Reflexionsspektrum und das zweite Reflexionsspektrum unterscheiden und Parameterwerte des ersten und des zweiten erfassten Parameters anhand des ersten bzw. des zweiten Reflexionsspektrums bestimmbar sind.

2. Optische Sensoranordnung nach Anspruch 1, wobei:
der erste Sensor (106) mit photonischen Kristallen eine erste Struktur hat, die aus einem ersten Material mit einem ersten Brechungsindex und einem zweiten Material mit einem zweiten Brechungsindex gebildet ist; und
der zweite Sensor (107) mit photonischen Kristallen eine zweite Struktur hat, die aus dem ersten Material und dem zweiten Material gebildet ist, wobei sich die erste Struktur von der zweiten Struktur unterscheidet.

3. Optische Sensoranordnung nach Anspruch 1 oder 2, wobei:
der erste Sensor (106) mit photonischen Kristallen eine erste Struktur hat, die mit zwei oder mehr Materialien gebildet ist, die zwei oder mehr verschiedene Brechungsindizes haben; und der zweite Sensor (107) mit photonischen Kristallen eine zweite Struktur hat, die mit mindestens einem Material gebildet ist, das sich von den zwei oder mehr Materialien der ersten Struktur unterscheidet.

4. Optische Sensoranordnung nach einem der Ansprüche 1-3, wobei der erste erfasste Parameter eines von Temperatur, Druck, Beschleunigung und Schwingung beinhaltet.

5. Optische Sensoranordnung nach einem der vorhergehenden Ansprüche, wobei der erste Sensor (106) mit photonischen Kristallen an einen ersten Bereich (104) des Substrats (102, 202, 302, 402) gekoppelt ist und der zweite Sensor (107) mit photonischen Kristallen an einen zweiten Bereich (105) des Substrats (102, 202, 302, 402) gekoppelt ist, wobei sich der erste Bereich (104) von dem zweiten Bereich (105) unterscheidet.

6. Optische Sensoranordnung nach einem der vorhergehenden Ansprüche, wobei das einfallende Licht im Wesentlichen gleichzeitig auf den ersten Sensor (106) mit photonischen Kristallen und auf den zweiten Sensor (107) mit photonischen Kristallen über einen Lichtwellenleiter (110, 210, 310, 410, 506) angewandt wird, wenn das Substrat (102, 202, 302, 402) an ein Ende des Lichtwellenleiters (110, 210, 310, 410, 506) gekoppelt ist.

7. Verfahren, aufweisend:
Anwenden von Licht auf ein erstes Ende eines Lichtwellenleiters;
Detektieren von Licht, das durch einen ersten Sensor (106) mit photonischen Kristallen, der an ein zweites Ende des Lichtwellenleiters gekoppelt ist, und einen zweiten Sensor (107) mit photonischen Kristallen, der an das zweite Ende des Lichtwellenleiters gekoppelt ist, reflektiert wird, wobei der erste Sensor (106) mit photonischen Kristallen ein erstes Reflexionsspektrum aufweist, das sich in Ansprechen auf einen ersten erfassten Parameter verändert, und der zweite Sensor (107) mit photonischen Kristallen ein zweites Reflexionsspektrum aufweist, das sich in Ansprechen auf einen zweiten erfassten Parameter verändert, der sich von dem ersten erfassten Parameter unterscheidet; und
Bestimmen von Parameterwerten des ersten erfassten Parameters und des zweiten erfassten Parameters basierend auf dem ersten bzw. dem zweiten Reflexionsspektrum des detektierten Lichts.

8. Verfahren nach Anspruch 7, wobei das auf den Lichtwellenleiter (110, 210, 310, 410, 506) angewandte Licht einen Wellenlängenbereich hat, der einen ersten Wellenlängenbereich, der dem ersten Reflexionsspektrum entspricht, und einen zweiten Wellenlängenbereich, der dem zweiten Reflexionsspektrum entspricht, beinhaltet.

9. Verfahren nach einem der Ansprüche 7 oder 8, wobei sich das erste Reflexionsspektrum des ersten Sensors (106) mit photonischen Kristallen in Ansprechen auf Veränderungen des zweiten erfassten Parameters nicht signifikant verändert.

10. Verfahren nach Anspruch 7, wobei sich das erste Reflexionsspektrum des ersten Sensors (106) mit photonischen Kristallen in Ansprechen auf Veränderungen des zweiten erfassten Parameters verändert und wobei das Bestimmen des Parameterwerts Verwenden von Licht, das von dem ersten Sensor (106) mit photonischen Kristallen reflektiert wird, und Licht, das von dem zweiten Sensor (107) mit photonischen Kristallen reflektiert wird, beinhaltet, um einen Wert zu bestimmen, der dem ersten erfassten Parameter entspricht.

11. Verfahren nach einem der Ansprüche 7 oder 8, wobei sich das erste Reflexionsspektrum des ersten Sensors (106) mit photonischen Kristallen in Ansprechen auf Veränderungen des zweiten erfassten Parameters verändert und wobei das Verfahren ferner Empfangen von Informationen von einem dritten Sensor aufweist, wobei der Parameterwert basierend auf den Informationen von dem dritten Sensor und basierend auf Licht, das von dem ersten Sensor (106) mit photonischen Kristallen reflektiert wird, bestimmt wird.

## Revendications

1. Montage capteur optique comprenant :
un substrat (102, 202, 302, 402) ;
un premier capteur à cristal photonique (106) couplé au substrat (102, 202, 302, 402), le premier capteur à cristal photonique (106) étant configuré pour réfléchir une première portion de lumière incidente correspondant à un premier spectre de réflexion, une première gamme de longueurs d'onde du premier spectre de réflexion changeant en réponse à des changements d'un premier paramètre capté ; et
un deuxième capteur à cristal photonique (107) couplé au substrat (102, 202, 302, 402), le deuxième capteur à cristal photonique (107) étant configuré pour réfléchir une seconde portion de lumière incidente correspondant à un second spectre de réflexion, une seconde gamme de longueurs d'onde du second spectre de réflexion changeant en réponse à des changements d'un second paramètre capté qui est différent du premier paramètre capté ;
le premier spectre de réflexion et le second spectre de réflexion étant différents et des valeurs de paramètre du premier et du second paramètre capté étant déterminables à partir des premiers et seconds spectres de réflexion, respectivement.

2. Montage capteur optique selon la revendication 1, dans lequel :
le premier capteur à cristal photonique (106) a une première structure formée d'un premier matériau avec un premier indice de réfraction et un second matériau avec un second indice de réfraction ; et
le deuxième capteur à cristal photonique (107) a une première structure formée du premier matériau et du second matériau, la première structure étant différente de la seconde structure.

3. Montage capteur optique selon la revendication 1 ou 2, dans lequel :
le premier capteur à cristal photonique (106) a une première structure formée avec au moins deux matériaux ayant au moins deux indices de réfraction différents ; et
le deuxième capteur à cristal photonique (107) a une seconde structure formée avec au moins un matériau qui est différent des au moins deux matériaux de la première structure.

4. Montage capteur optique selon l'une quelconque des revendications 1 à 3, dans lequel le premier paramètre capté inclut un paramètre parmi une température, une pression, une accélération et une vibration.

5. Montage capteur optique selon l'une quelconque des revendications précédentes, dans lequel le premier capteur à cristal photonique (106) est couplé à une première région (104) du substrat (102, 202, 302, 402) et le deuxième capteur à cristal photonique (106) est couplé à une seconde région (105) du substrat (102, 202, 302, 402), la première région (104) étant différente de la seconde région (105).

6. Montage capteur optique selon l'une quelconque des revendications précédentes, dans lequel la lumière incidente est appliquée substantiellement simultanément sur le premier capteur à cristal photonique (106) et sur le deuxième capteur à cristal photonique (107) via une fibre optique (110, 210, 310, 410, 506) quand le substrat (102, 202, 302, 42) est couplé à une extrémité de la fibre optique (110, 210, 310, 410, 506).

7. Procédé comprenant de :
appliquer de la lumière à une première extrémité d'une fibre optique ;
détecter la lumière réfléchie par un premier capteur à cristal photonique (106) couplé à une seconde extrémité de la fibre optique et un deuxième capteur à cristal photonique (107) couplé à la seconde extrémité de la fibre optique, le premier capteur à cristal photonique (106) présentant un premier spectre de réflexion qui change en réponse à un premier paramètre capté, et le deuxième capteur à cristal photonique (106) présentant un second spectre de réflexion qui change en réponse à un second paramètre capté qui est différent du premier paramètre capté ; et
déterminer des valeurs de paramètre du premier paramètre capté et du second paramètre capté en fonction des premiers et seconds spectres de la lumière détectée, respectivement.

8. Procédé selon la revendication 7, dans lequel la lumière appliquée à la fibre optique (110, 210, 310, 410, 506) a une gamme de longueurs d'onde qui inclut une première gamme de longueurs d'onde correspondant au premier spectre de réflexion et une seconde gamme de longueurs d'onde correspondant au second spectre de réflexion.

9. Procédé selon l'une quelconque des revendications 7 ou 8, dans lequel le premier spectre de réflexion du premier capteur à cristal photonique (106) ne change pas significativement en réponse à des changements du second paramètre capté.

10. Procédé selon la revendication 7, dans lequel le premier spectre de réflexion du premier capteur à cristal photonique (106) change en réponse à des changements du second paramètre capté, et dans lequel déterminer la valeur de paramètre inclut d'utiliser la lumière réfléchie par le premier capteur à cristal photonique (106) et la lumière réfléchie par le deuxième capteur à cristal photonique (107) pour déterminer une valeur correspondant au premier paramètre capté.

11. Procédé selon l'une quelconque des revendications 7 ou 8, dans lequel le premier spectre de réflexion du premier capteur à cristal photonique (106) change en réponse à des changements du second paramètre capté, le procédé comprenant en outre de recevoir des informations d'un troisième capteur, la valeur de paramètre étant déterminée sur la base des informations en provenance du troisième capteur et sur la base de la lumière réfléchie par le premier capteur à cristal photonique (106).
